Europäisches Patentamt
European Patent Office
Office européen des brevets

(19) (11) Numéro de publication: **0 142 436 B1**

(12) **FASCICULE DE BREVET EUROPEEN**

(45) Date de publication de fascicule du brevet: **27.02.91**

(51) Int. Cl.⁵: **G06K 19/06**, B07C 5/34, G06K 7/08

(21) Numéro de dépôt: **84402255.8**

(22) Date de dépôt: **09.11.84**

(54) **Système d'échange d'informations à étiquettes électroniques.**

(30) Priorité: **10.11.83 FR 8317867**

(43) Date de publication de la demande: **22.05.85 Bulletin 85/21**

(45) Mention de la délivrance du brevet: **27.02.91 Bulletin 91/09**

(84) Etats contractants désignés: **BE DE GB IT NL SE**

(56) Documents cités:

**EP-A- 0 027 058**
**WO-A-83/02183**
**DE-C- 3 226 014**
**FR-A- 2 413 721**
**FR-A- 2 494 935**
**GB-A- 1 447 099**
**US-A- 3 906 460**
**US-A- 4 388 524**
**EP-A- 0 088 591**
**DE-A- 2 909 899**
**FR-A- 2 151 914**
**FR-A- 2 494 466**
**FR-A- 2 513 411**
**US-A- 3 859 624**
**US-A- 4 068 232**

**Electronic Design 6,March 15,1978,page 72**

**Machine Designs ,vol.49,No.1,1977,pp 70-74**

(73) Titulaire: **Saulnier, Dominique**
**37-39, allée du Closeau**
**F-93160 Noisy le Grand(FR)**

(72) Inventeur: **Saulnier, Dominique**
**37-39, allée du Closeau**
**F-93160 Noisy le Grand(FR)**

(74) Mandataire: **Sauvage, Renée**
**Cabinet Sauvage 100 bis, avenue de Saint-Mandé**
**F-75012 Paris(FR)**

**EP 0 142 436 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention se rapporte à un système d'échange d'informations à étiquettes électroniques.

Pour transmettre des informations, en particulier en milieu industriel en plusieurs endroits différents, à chaque fois entre un objet mobile et un organe fixe de transmission d'informations, tous les organes fixes étant reliés à un centre de gestion, ce centre étant relié à des machines commandées par ledit objet et/ou effectuant des interventions sur cet objet, il est connu de munir cet objet de ce qu'il est convenu d'appeler une "étiquette électronique", dispositif comportant essentiellement une mémoire inscriptible et effaçable un circuit émetteur et un circuit récepteur. L'étiquette électronique échange des informations avec l'organe fixe de transmission lorsqu'elle se trouve à sa proximité.

Lorsque les organes, de transmission sont en grand nombre dans une installation, et qu'ils coopèrent simultanément chacun avec-un objet mobile, les informations échangées entre eux ne peuvent toutes être traitées ou contrôlées simultanément, surtout si elles sont longues par le centre de gestion ce qui ralentit le processus auquel sont soumis les objets mobiles.

On connaît d'après le document FR-A-2 413 721 un terminal portable pour transactions financières qui permet d'effectuer certaines opérations sans nécessiter de liaison à un calculateur central, mais ce terminal ne peut intervenir que sur des cartes à mémoire spéciales qui ne peuvent pas du tout servir d'"étiquettes électroniques" pour d'autres objets qui, de toute façon ne pourraient pas être manipulés ou traités par ces terminaux connus.

On connaît en outre, d'après Electronic Design 6, March 15, 1978, p. 72, un circuit à microprocesseur relié à plusieurs périphériques, mais un tel circuit ne peut être adapté sans modifications importantes à la commande d'un système à étiquettes électroniques. On connaît, par ailleurs, d'après FR-A-2 513 411, un système employant des étiquettes électroniques, mais ces étiquettes doivent être utilisées manuellement. Enfin, on connaît, d'après DE-A-2 909 899, un réseau de caisses enregistreuses, mais les dispositifs lecteurs d'informations de ce réseau ne peuvent lire que des informations inscrites sur des supports matériels tels que des cartes perforées.

La présente invention a pour objet un dispositif permettant l'échange d'informations simultanément entre un grand nombre d'organes fixes de transmission faisant partie d'une même installation et les étiquettes électroniques d'un même nombre d'objets mobiles se trouvant chacun devant un organe fixe de transmission, ce, sans ralentir le processus auquel sont soumis lesdits objets, même lorsque les informations échangées sont longues et nombreuses. Le dispositif faisant l'objet de l'invention doit pouvoir être facilement adapté à un grand nombre d'applications ou être facilement modifié lors de modifications dans le processus d'une installation.

La présente invention se rapporte à une installation du type comportant des postes fixes munis d'organes de transmission de données, dans laquelle chaque organe de transmission est du type comprenant un modulateur-démodulateur de liaison à un centre de gestion distant, un circuit de réception et un circuit d'émission reliés à un encodeur-décodeur, et, le cas échéant, un circuit d'émission de puissance pour alimenter en énergie les circuits électroniques des étiquettes électroniques, et dans laquelle les objets passant dans les postes fixes sont munis d'étiquettes électroniques, chaque étiquette électronique étant du type comportant un circuit de réception et un circuit d'émission et une mémoire non volatile inscriptible et effaçable, et selon l'invention les postes fixes comportent des machines commandées par ledit objet et effectuant éventuellement des interventions sur cet objet au cours d'un processus, et on dispose dans chaque organe de transmission un circuit d'exploitation locale d'informations relié au modulateur et au démodulateur ainsi qu'à l'encodeur-décodeur, ce circuit d'exploitation locale comportant des moyens mettant en oeuvre au moins un programme de commande du poste fixe correspondant, programme dont les instructions élémentaires sont choisies parmi celles contenues dans ce circuit d'exploitation locale et liées par intervention de tous les circuits et dispositifs, qui lui sont raccordés, notamment le centre de gestion après une évaluation des données reçues des postes fixes ou des objets.

Selon un mode de réalisation préféré de l'invention, le circuit d'exploitation locale d'informations comprend un microprocesseur relié à une mémoire de programme dans laquelle sont mémorisées toutes les instructions élémentaires nécessaires à tous les traitements susceptibles d'être effectués par le microprocesseur sur les informations échangées entre les étiquettes électroniques et les organes de transmission et entre ceux-ci et les dispositifs qu'ils peuvent commander et les dispositifs dont ils reçoivent des informations extérieures, et ce microprocesseur est également relié à une mémoire de données dans laquelle sont mémorisées, pour l' application considérée, les données permettant de lier tout ou partie desdites instructions élémentaires pour constituer un programme de traitement spécifique de l'application considérée.

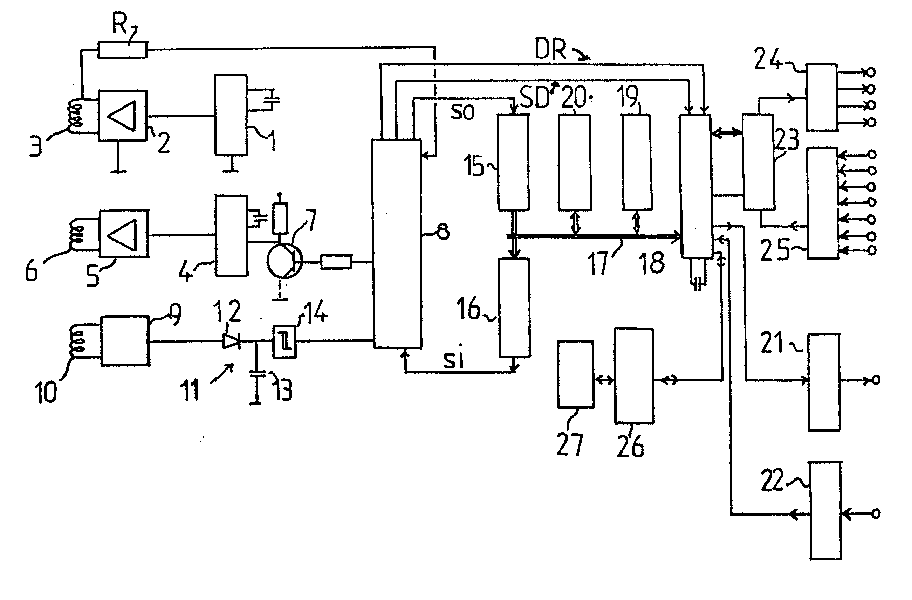

La présente invention sera mieux comprise à l'aide de la description détaillée d'un mode de réalisation pris comme exemple non limitatif et illustré par le dessin annexé dont la figure unique est un bloc-diagramme d'un organe fixe de transmission d'informations conforme à l'invention.

L'installation à laquelle s'applique la présente invention est, par exemple, une chaîne de production industrielle automatisée dans laquelle les objets mobiles à usiner et/ou à traiter et/ou à manipuler sont munis chacun d'une étiquette électronique (non représentée), cette étiquette étant par exemple du type décrit dans FR-A-2 494 935. Ces objets passent dans des postes successifs de traitement et/ou d'usinage et/ou de manipulation munis chacun d'un organe fixe de transmission d'informations disposé de façon que les étiquettes électroniques, elles-mêmes disposées de façon appropriée sur les objets mobiles, passent le plus près possible de cet organe lorsque ces objets passent dans lesdits postes, et puissent échanger avec lui des informations concernant notamment l'identification des objets, les diverses opérations qu'ils ont déjà subies, qu'ils doivent subir dans le poste considéré, leur destination ultérieure, etc ... Les différents organes fixes de transmission d'informations sont reliés à un centre de gestion.

L'installation selon FR-A-2 494 935 n'est pas une chaîne de production.

En effet, dans le dispositif décrit, un séquenceur reçoit des données du centre de gestion distant (mais ne lui en envoie pas du tout) pour les faire mémoriser dans l'étiquette. D'autre part, le séquenceur n'envoie au centre de gestion que l'un des deux signaux "bonne ou mauvaise comparaison". Un plot de lecture reçoit les données mémorisées dans l'étiquette 5 et les transmet au centre de gestion (sans en recevoir de données). Le centre de gestion n'envoie au plot de lecture que deux ordres "mise en haute impédance" et "effacement de la mémoire temporaire". Ni le séquenceur, ni le plot de lecture, ne comportent de microprocesseur.

WO 83/02183 n'enseigne que la transmission unilatérale d'informations.

Machine Design, vol. 49, n° 1, 1977, pp 70-74 montre l'utilisation d'un microprocesseur programmé pour des périphériques intelligents.

L'organe fixe de transmission représenté sur le dessin comporte un oscillateur 1 relié à un amplificateur de puissance 2, lui-même relié à une bobine 3 qui transmet, par induction, à une bobine correspondante, faisant partie d'un circuit accordé sur la fréquence de l'oscillateur 1, disposée dans une étiquette électronique (connue en soi et non représentée), l'énergie nécessaire à l'étiquette pour échanger les informations avec l'organe fixe lorsque l'étiquette passe à proximité de cet organe.

L'organe de transmission comporte ensuite un second oscillateur 4 relié à un amplificateur 5 lui-même relié à une bobine d'émission 6. L'oscillateur 4 est d'autre part relié à un modulateur 7 commandé par la sortie d'encodage d'un encodeur-décodeur 8 de type Manchester. Le modulateur 7 agit, par exemple, par coupure du circuit oscillant de l'oscillateur 4.

L'organe de transmission comporte un troisième oscil lateur 9 dont la bobine 10 du circuit accordé sert de bobine de réception du signal émis par l'étiquette électronique, qu'elle absorbe ou non par courants de Foucault. L'absorption de signal provoque une diminution de l'amplitude de la tension de sortie de l'oscillateur 9. Cette variation d'amplitude est démodulée par un démodulateur 11, relié à la sortie de l'oscillateur 9, qui comporte une diode de redressement 12 suivie d'un condensateur 13. La sortie du démodulateur 11 est reliée à un circuit 14 de filtrage et de mise en forme comportant par exemple un trigger de Schmitt. La sortie du circuit 14 est reliée à l'entrée de décodage du circuit 8.

La sortie série S.O. de signaux décodés du circuit 8 est reliée à un circuit 15 de conversion série-parallèle, et son entrée série S.I. de signaux à encoder est reliée à la sortie d'un circuit 16 de conversion parallèle-série.

La sortie parallèle du circuit 15 et l'entrée parallèle du circuit 16 sont reliées au bus 17 d'un microprocesseur 18. Le microprocesseur 18 est associé à une mémoire de programme 19 dans laquelle sont mémorisées toutes les instructions élémentaires nécessaires à tous les traitements susceptibles d'être effectués par le microprocesseur 18 sur les informations échangées entre les étiquettes électroniques et l'organe de transmission ainsi qu'entre le microprocesseur et tous les circuits et dispositifs qui lui sont raccordés de la façon décrite ci-dessous. Ces instructions élémentaires sont par exemple : lecture d'une plage de valeurs (dans la mémoire de l'étiquette), résultat de la lecture d'une plage, lecture d'une zone de valeurs résultat de la lecture d'une zone, écriture d'une valeur dans une plage, résultat de l'écriture d'une plage, etc ...

Le microprocesseur 18 est également associé à une mémoire 20, programmable par l'utilisateur, qui y mémorise les données permettant de lier tout ou partie des instructions de la mémoire 19 pour constituer le programme de traitement désiré.

Le microprocesseur 18 est d'autre part relié à un modulateur 21 d'émission série et à un démodulateur 22 de réception série qui assurent la liaison entre le microprocesseur 18 et le centre de gestion distant (non représenté) qui est relié de la même façon à tous les organes de transmission de l'installation.

La programmation de la mémoire 20 peut être faite soit par téléchargement d'un programme via le démodulateur 22, la mémoire 20 étant en place dans l'organe de transmission, soit en dehors de l'organe, la mémoire 20, amovible, étant enlevée et disposée dans un appareil de programmation appropriée.

Le microprocesseur 18 est enfin relié, via un expandeur d'entrées-sorties 23 à une interface de sortie 24 et à une interface d'entrée 25. Les interfaces 24 et 25, qui comportent par exemple des isolateurs opto-électroniques, sont reliées, de façon non représentée, à des capteurs, a des servomécanismes, et autres dispositifs nécessaires au poste de travail, dans lequel est implanté l'organe de transmission d'informations en question, pour détecter la position correcte d'un objet dans ce poste, pour le manipuler, pour déclencher les processus d'usinage, pour évacuer cet objet, etc ...

Les sorties DR (Data Received, c'est-à-dire données reçues) et SD (Send Data, c'est-à-dire envoi de données) du circuit 8 sont reliées de façon appropriée au microprocesseur 18. La bobine 3 est reliée via une résistance R de valeur appropriée à l'entrée de signaux d'horloge du circuit 8. Le choix des fréquences des oscillateurs 1, 4 et 9 est effectué de la même façon que pour les circuits de l'art antérieur.

Le microprocesseur 18 est enfin relié à un modulateur-démodulateur 26, lui-même relié à un organe périphérique 27 qui peut être une imprimante, un clavier d'introduction de données, une calculatrice de poche munie de connexions appropriées, un moniteur vidéo, etc ... L'organe périphérique 27 est disposé à proximité de l'organe de transmission de données et permet d'effectuer localement (c'est-à-dire au poste de travail même) la surveillance et/ou la maintenance et/ou la modification des données de la mémoire 20, ce qui est particulièrement avantageux en cas de panne du centre de gestion.

Lorsque l'on fixe une étiquette électronique sur un objet qui va être soumis à un processus industriel dans une chaîne de production, cette étiquette peut soit déjà comporter des données concernant cet objet, soit être vierge ou porter des données quelconques sans rapport avec l'objet. Dans tous les cas, les données concernant l'objet peuvent être introduites et mémorisées dans l'étiquette à l'aide de l'organe de transmission décrit ci-dessus qui est alors placé en amont de la chaîne de production, ou à un premier poste, respectivement. Cet organe permet aussi bien d'effacer complètement la mémoire non volatile de l'étiquette que d'y introduire des données nouvelles ou que de modifier certaines données, tout comme cela était possible avec les organes de l'art antérieur.

A chaque poste de travail, les données mémorisées dans l'étiquette sont lues par l'organe de transmission de données et exploitées par son microprocesseur 18. Le microprocesseur 18 commande, via les circuits 23 et 24, la mise en route des appareils d'usinage, de traitement ou de manipulation du poste de travail considéré dès qu'il a reçu, des capteurs de position reliés au circuit 25, l'information disant que l'objet est à sa place correcte dans le poste de travail. Lorsque le travail est terminé, des capteurs appropriés le signalent au microprocesseur via les circuits 25 et 23, et le microprocesseur commande éventuellement l'inscription de nouvelles données dans l'étiquette (genre de travail qui vient d'être effectué, travail à effectuer subséquemment, prochaine destination, etc . ..) et commande, via les circuits 23 et 24, l'évacuation de l'objet vers le poste de travail suivant ou vers un lieu de rangement).

A tout moment, le microprocesseur 18 peut dialoguer avec le centre de gestion distant via les circuits 21 et 22, mais ce dialogue est généralement très limité car c'est le microprocesseur 18 lui-même qui supervise tout le travail effectué au poste de travail.

Le dialogue entre le microprocesseur 18 et le centre de gestion distant peut être assez court, différé par rapport au travail supervisé par le microprocesseur, et même être très peu fréquent. Ce dialogue peut par exemple se réduire à des ordres d'arrêt émis par le centre de gestion en cas de panne survenant dans la chaîne de fabrication, et à des comptages statistiques des différents travaux effectués pendant une période déterminée. Comme précisé ci-dessus, on peut modifier, à partir du centre de gestion, les données mémorisées dans la mémoire 20.

Par conséquent, le circuit d'exploitation locale d'informations de l'invention permet à un grand nombre de postes de travail de fonctionner simultanément en exploitant de façon décentralisée les informations contenues dans les étiquettes électroniques sans interférer les uns avec les autres, et donc de ne pas ralentir le fonctionnement de la chaîne de production.

## Revendications

**1.** Système d'échange d'informations à étiquettes électroniques, comportant des postes fixes munis d'organes de transmission de données, les objets passant dans ces postes fixes étant munis d'étiquettes électroniques à mémoire non volatile effaçable et inscriptible, dans lequel chaque organe de transmission est du type comportant un modulateur-démodulateur (21, 22) de liaison à un centre de gestion distant, un encodeur-décodeur (8) relié à un circuit de réception (9, 10, 11, 14) et à un circuit d'émission (4 à 7), et comprenant, le cas échéant, un circuit d'émission de puissance (1 à 3) pour alimenter en énergie les circuits électroniques des étiquettes électroniques, et dans lequel chaque étiquette électronique est du type comportant un circuit de réception, un circuit d'émission, et ladite mémoire non volatile, caractérisé par le fait que les postes fixes comportent des machines commandées par ledit objet et effectuant éventuellement des interventions sur cet objet au cours d'un processus, et que l'on dispose dans chaque organe de transmission un circuit d'exploitation locale d'informations (15 à 20) relié au modulateur et au démodulateur, ce circuit d'exploitation locale comportant des moyens mettant en oeuvre au moins un programme de commande du poste fixe correspondant, programme dont les instructions élémentaires sont choisies parmi celles contenues dans ce circuit d'exploitation locale et liées par intervention de tous les circuits et dispositifs qui lui sont raccordés, notamment le centre de gestion après une évaluation des données reçues des postes fixes ou des objets.

**2.** Système d'échange d'informations selon la revendication 1, caractérisé par le fait que le circuit d'exploitation locale d'informations comprend un microprocesseur (18) relié à une mémoire de programme (19) dans laquelle sont mémorisées toutes les instructions élémentaires nécessaires à tous les traitements susceptibles d'être effectués par le microprocesseur sur les informations échangées entre les étiquettes électroniques et les organes de transmission et entre ceux-ci et les dispositifs qu'ils peuvent commander ainsi que les dispositifs dont ils reçoivent des informa tions extérieures, ce microprocesseur étant également relié à une mémoire de données (20) dans laquelle sont mémorisées, pour l'application considérée, les données permettant de lier tout ou partie desdites instructions élémentaires pour constituer un programme de traitement spécifique de l'application considérée.

**3.** Système d'échange d'informations selon la revendication 2, caractérisé par le fait que le microprocesseur est relié via un expandeur d'entrées-sorties (23) à une interface d'entrée (25) et à une interface de sortie (24) permettant l'échange d'informations entre un organe de transmission et des dispositifs dont il reçoit des informations extérieures et des dispositifs qu'il commande.

**4.** Système d'échange d'informations selon l'une quelconque des revendications 2 et 3, caractérisé par le fait que le microprocesseur est également relié, via un modulateur-démodulateur (26) à un organe périphérique (27) disposé à proximité de l'organe de transmission de données et permettant d'effectuer localement la surveillance et/ou la maintenance et/ou la modification des données de ladite mémoire de données (20).

## Claims

**1.** An electronic label data exchange system comprising fixed work posts provided with data transmission means, the objects passing through these fixed posts being provided with electronic labels having a non-volatile memory which may be cleared and written into, in which each transmission means is of the type comprising a modulator-demodulator (21, 22) for connection to a remote control center, a coder-decoder (8) connected to a receiving circuit (9, 10, 11, 14) and to a transmission circuit (4 to 7), and comprising, if required, a power transmission circuit (1 to 3) for supplying the electronic circuits of the electronic labels with power, and in which each electronic label is of the type comprising a reception circuit, a transmission circuit and said non-volatile memory, characterized by the fact that the fixed work posts include machines controlled by said object and carrying out, if required, interventions on said object during a process and by the fact that a local data exploitation circuit (15 to 20) connected to the modulator and to the demodulator is disposed in each fixed transmission means, said local exploitation circuit including means executing at least a program controlling the corresponding fixed work post, program the elementary instructions of which are selected among those contained in this local exploitation circuit and are linked through the intervention of all the circuits and devices which are connected thereto, among others the control center after an evaluation of the data received from the fixed work posts or from the objects.

**2.** Data exchange system according to claim 1, characterized by the fact that the local data exploitation circuit comprises a microprocessor (18) connected to a program memory (19) in which are stored all the elementary instructions required for all the processing likely to be effected by the microprocessor on the exchanged data between the electronics labels and the transmission means and between these latter and the devices which they may control as well as the devices from which they receive external information, this microprocessor being also connected to a data memory (20) in which are stored, for the application considered, the data for linking together all or part of said elementary instructions for forming a processing program specific to the application considered.

3. Data exchange system according to claim 2, characterized by the fact that the microprocessor is connected by an input-output expander (23) to an input interface (25) and to an output interface (24) for permitting the information exchange between a transmission means and devices from which it receives external information and devices which it controls.

4. Data exchange system according to anyone of claims 2 and 3, characterized by the fact that this microprocessor is also connected, via a modulator-demodulator (26), to a peripheral means (27) disposed close to the data transmission means and allowing the monitoring and/or maintenance and/or modification of the data in said data memory (20) to be effected locally.

## Ansprüche

1. System zum Austausch von Informationen mit elektronischen Etiketten mit festen Posten die mit Datenübertragungselementen versehen sind, wobei die in diese festen Posten gehenden Objekte mit elektronischen Etiketten aus nicht flüchtigem, löschbaren und beschreibbaren Speicher versehen sind, in dem jedes Übertragungselement von der Art ist, die einen Modulator-Demodulator (21,22) zur Verbindung mit einem entfernten Betriebszentrum und einen mit einem Empfangsschaltkreis (9, 10, 11,14) und einem Sendeschaltkreis (4 bis 7)-verbundenen Kodierer-Dekodierer (8) aufweist und, falls notwendig,einen Leistungssendeschaltkreis (1 bis 3) umfaßt, um die elektronischen Schaltkreise der elektronischen Etikette mit Energie zu versorgen, und bei dem jedes elektronische Etikett von der Art ist, die einen Empfangsschaltkreis, einen Sendeschaltkreis und den nicht flüchtigen Speicher umfaßt, gekennzeichnet durch die Tatsache, daß die festen Posten Maschinen umfassen, die von dem Objekten gesteuert werden und eventuell im Laufe eines Prozesses Eingriffe auf dieses Objekt ausführen, und daß man in jedem Übertragungseiement einen lokalen Informationsauswertungsschaltkreis anordnet, der mit dem Modulator und Demodulator verbunden ist, wobei dieser lokale Auswertungsschaltkreis Vorrichtungen umfaßt, die wenigstens ein Steuerungs programm für den entsprechenden festen Posten ausführen, wobei die Elementarinstruktionen des Programms unter denen ausgewählt sind, die in dem lokalen Auswertungsschaltkreis enthalten sind und durch Eingreifen aller mit ihm verbundenen Schaltkreise und Vorrichtungen verbunden sind, insbesondere dem Betriebszentrum nach Auswertung der von den festen Posten oder den Objekten empfangenen Daten.

2. System zum Austausch von Informationen nach Anspruch 1, gekennzeichnet durch die Tatsache, daß der lokale Auswertungsschaltkreis für Informationen einen Mikroprozessor (18) umfaßt, der mit einem Programmspeicher (19) verbunden ist, in dem alle Elementarinstruktionen gespeichert sind, die für alle Bearbeitungen notwendig sind, die geeignet sind, von dem Mikroprozessor auf die zwischen den elektronischen Etiketten und den Übertragungselementen und zwischen diesen und den Vorrichtungen, die sie steuern können, ebenso wie den Vorrichtungen, von denen sie externe Informationen erhalten, ausgetauschten Informationen hin ausgeführt zu werden, wobei dieser Mikroprozessor ebenfalls mit einem Datenspeicher (20) verbunden ist, in dem für die in Betracht kommende Anwendung die Daten gespeichert sind, die ermöglichen, alle oder einen Teil der Elementarinstruktionen zu verbinden, um ein für die in Betracht kommende Anwendung spezifisches Bearbeitungsprogramm zu bilden.

3. System zum Austausch von Informationen nach Anspruch 2, gekennzeichnet durch die Tatsache, daß der Mikroprozessor über einen Eingangs-Ausgangsexpander (23) mit einer Eingangsschnittstelle (25) und einer Ausgangsschnittstelle (24) verbunden ist, die den Austausch von Informationen zwischen einem Übertragungselement und Vorrichtungen, von denen es externe Informationen empfängt, und Vorrichtungen, die es steuert, ermöglichen.

4. System zum Austausch von Informationen nach einem der Ansprüche 2 oder 3, gekennzeichnet durch die Tatsache, daß der Mikroprozessor über einen Modulator-Demodulator (26) ebenfalls mit einem Peripherieelement (27) verbunden ist, das in der Nähe des Datenübertragungselements angeordnet ist und ermöglicht, lokal die Überwachung und/oder die Aufrechterhaltung und/oder die Modifikation der Daten des Datenspeichers (20) durchzuführen.

DR
SD
so
si
1
2
3
4
5
6
7
8
9
10
11
12
13
14
15
16
17
18
19
20
21
22
23
24
25
26
27